# EUROPÄISCHE PATENTSCHRIFT

(11) **EP 4 630 774 B1**
(45) Veröffentlichungstag und Bekanntmachung des Hinweises auf die Patenterteilung: **26.08.2026**
(21) Anmeldenummer: 23806248.3
(22) Anmeldetag: 15.11.2023
(51) Int. Cl.: G01L 19/00, G01L 19/14

(54) **SENSOR UND MESSVORRICHTUNG MIT EINEM SENSOR**
SENSOR AND MEASURING DEVICE HAVING A SENSOR
CAPTEUR ET DISPOSITIF DE MESURE DOTÉ D'UN CAPTEUR

(30) Priorität: 07.12.2022 DE 102022213195
(43) Veröffentlichungstag der Anmeldung: 15.10.2025
(73) Patentinhaber: Robert Bosch GmbH, 70442 Stuttgart (DE)
(72) Erfinder: ALDINGER, Rolf, 73240 Wendlingen (DE); DORSCH, Niko, 71229 Leonberg (DE)
(86) Internationale Anmeldenummer: PCT/EP2023/081838
(87) Internationale Veröffentlichungsnummer: WO 2024/120768

(56) Entgegenhaltungen:
- EP-B1- 3 236 222
- DE-A1- 102012 204 950

## Beschreibung

### Stand der Technik

Im Stand der Technik sind verschiedene Sensoren bekannt, die eine Kombination aus Druck- und Temperatursensor darstellen und die als Messfühler ausgebildet sind, der mit einem Anschlussstutzen in eine Messöffnung eines Kanalteils eingeführt werden kann, in welchem ein Strömungskanal für das zu messende fluiden Medium enthalten ist. Um die Temperatur eines strömenden Mediums möglichst genau und schnell messen zu können, ist es vorteilhaft die Temperaturmesszelle möglichst nahe an der Stirnseite des Messfühlers in demjenigen Bereich anzuordnen, der in das Medium eingeführt ist. Dabei sollte insbesondere bei gasförmigen Medien die thermische Masse des Temperaturfühlers möglichst gering sein.

Um den Druck in aggressiven Medien zu messen, gibt es Drucksensoren mit einer sogenannte Ölvorlage, die über eine Trennmembran die Trennung vom Messmedium zur eigentlichen Druckmesszelle gewährleisten. Die Membrangröße hat einen großen Einfluss auf die erreichbare Genauigkeit des Sensors. Je größer die Membran, umso genauer das Drucksignal. Ein solcher Sensor ist beispielsweise aus der DE 10 2008 054 382 A1 bekannt.

Aus der DE 10 2012 204 950 A1 ist ein Sensor mit kombinierter Druck- und Temperaturmessfunktion bekannt, bei dem ein Temperaturfühler in einer Hülse durch die Mitte der Trennmembran geführt wird. Gleichzeitig wird die Trennmembran in Richtung der Gehäusemitte des Sensors verlagert. Daher muss das Medium durch eine Zuführungsöffnung des Anschlussstutzens in das Innere des Anschlussstutzens geführt werden. Vorteile wie beispielsweise eine Gefrierrobustheit des Sensors werden dadurch eingeschränkt.

Aus der DE 10 2012 204950 A1 ist ein gattungsbildender Sensor zur Erfassung eines Drucks und einer Temperatur eines fluiden Mediums bekannt.

Ein weiterer Sensor zur Erfassung eines Drucks und einer Temperatur ist aus der EP 3 236 222 B1 bekannt.

### Offenbarung der Erfindung

Die Erfindung betrifft einen Sensor zur Erfassung eines Drucks und einer Temperatur eines fluiden Mediums, umfassend ein Sensorgehäuse mit einem Anschlussstutzen zur Einführung in eine Messöffnung, ein in dem Sensorgehäuse angeordnetes Drucksensorelement, ein in dem Anschlussstutzen verlaufender mit einer Druckübertragungsflüssigkeit gefüllter Kanal, der auf einer dem fluiden Medium zuweisenden Seite mit einer Trennmembran verschlossen ist und der auf einer dem fluiden Medium abweisenden Seite mit dem Drucksensorelement derart in Verbindung steht, dass ein auf die Trennmembran wirkender Druck des Mediums über die Druckübertragungsflüssigkeit auf das Drucksensorelement übertragbar ist, und mit einem an dem Sensorgehäuse angeordneten Temperaturfühler zur Einführung in die Messöffnung. Der Anschlussstutzen weist in einer Längserstreckungsrichtung einen sich an das Sensorgehäuse anschließenden ersten Abschnitt, einen sich an den ersten Abschnitt anschließenden zweiten Abschnitt und einen sich an den zweiten Abschnitt anschließenden dritten Abschnitt aufweist, wobei der Außendurchmesser des zweiten Abschnitts kleiner als der Außendurchmesser des ersten Abschnitts und der Außendurchmesser des dritten Abschnitts ausgebildet ist. Erfindungsgemäß ist zwischen dem ersten Abschnitt und dem dritten Abschnitt ein Freiraum gebildet, wobei der Temperaturfühler durch den ersten Abschnitt hindurchgeführt ist und in den Freiraum hineinragt.

Weiterhin betrifft die Erfindung eine Messvorrichtung mit einem solchen Sensor und mit einem Kanalteil, welches einen Strömungskanal für ein strömendes fluides Medium aufweist, wobei eine Messöffnung in dem Kanalteil ausgebildet ist, wobei der Anschlussstutzen des Sensors in die Messöffnung derart eingesetzt ist, dass zumindest der mit der Trennmembran versehene dritte Abschnitt des Anschlussstutzens und ein mit einer Temperaturmesszelle versehener Endabschnitt des Temperaturfühlers dem strömenden Medium ausgesetzt sind.

### Vorteile der Erfindung

Der erfindungsgemäße Sensor zur Erfassung eines Drucks und einer Temperatur eines fluiden Mediums ermöglicht es vorteilhaft, den Bauraum von kombinierten Temperatur- und Drucksensoren mit Ölvorlagen deutlich zu verbessern. Da der in die Messöffnung einzusetzende Anschlussstutzen bis in den Strömungskanal des Mediums verlängert werden kann, ist es vorteilhaft möglich, durch Verlängerung des Anschlussstutzens einen Bereich zu schaffen, in dem das nicht benötigte Material des Anschlussstutzens ausgespart werden kann, um einen Freiraum zu schaffen, in welchen der Temperaturfühler mit der Temperaturmesszelle eingreifen kann. Bei der erfindungsgemäßen Lösung kann die Temperaturmesszelle des Temperaturfühlers daher von der Stirnseite des Anschlussstutzens aus und in der Längserstreckungsrichtung des Anschlussstutzens gesehen vorteilhaft hinter die Ölvorlage zurückversetzt werden. Umgekehrt ist die Trennmembran mit der Ölvorlage in der Längserstreckungsrichtung gesehen vor der Temperaturmesszelle angeordnet. Dadurch entfällt die Notwendigkeit, den Temperaturfühler durch die Trennmembran hindurchzuführen oder aber in aufwändiger Weise innerhalb derselben Messöffnung um die Trennmembran herumzuführen, was eine nachteilige Verkleinerung der Trennmembran zur Folge hätte. Die Trennmembran am dritten Abschnitt des Anschlussstutzens kann daher im Durchmesser relativ groß ausgebildet werden, wobei hier der maximale Durchmesser vorteilhaft im Wesentlichen durch die Einführbarkeit des Anschlussstutzens in die Messöffnung, nicht aber durch den Raumbedarf des Temperaturfühlers begrenzt wird.

Vorteilhafte Ausgestaltungen und Weiterbildungen der Erfindung ermöglichen die in den abhängigen Ansprüchen enthaltenen Merkmale.

In einfacher Weise kann der Freiraum in Form einer den zweiten Abschnitt umlaufenden Ringnut gebildet werden, welche durch eine dem Freiraum zugewandte, insbesondere kreisringförmige Fläche des ersten Abschnitts und eine dem Freiraum zugwandte, insbesondere kreisringförmige Fläche des dritten Abschnitts flankiert wird. Dadurch kann der an dem zweiten Abschnitt festgelegte dritte Abschnitt des Anschlussstutzens wie ein tellerförmiges Podest, beziehungsweise wie ein Stempel in die Strömung des Mediums gehalten werden.

Der Temperaturfühler kann vorteilhaft mit einem eine Temperaturmesszelle aufweisenden Endabschnitt aus einer dem Freiraum zugewandten, insbesondere kreisringförmigen Fläche des ersten Abschnitts des Anschlussstutzens in den Freiraum abragen. Dadurch wird die Temperaturmesszelle des Temperaturfühlers von dem strömenden Medium ausreichend umspült, obwohl die Trennmembran in der Längserstreckungsrichtung vor der Temperaturmesszelle angeordnet ist.

In einem vorteilhaften Ausführungsbeispiel kann vorgesehen sein, dass der Endabschnitt in dem Freiraum zumindest teilweise um den zweiten Abschnitt des Anschlussstutzens herumgewunden ist. Dies verbessert die thermische Entkopplung der Temperaturmesszelle von dem Anschlussstutzen erheblich.

Der Temperaturfühler kann einen von dem Endabschnitt abweisenden Anschlussbereich aufweisen, der in einem Gehäuseinnenraum des Sensorgehäuses angeordnet ist. Der Anschlussbereich kann mit einem Schaltungsträger oder Kontaktelementen innerhalb des Gehäuseinnenraumes in einfacher Weise kontaktiert werden.

Die Trennmembran ist vorzugsweise an dem von dem Sensorgehäuse abgewandten Ende des dritten Abschnitts des Anschlussstutzens und dadurch an der in die Messöffnung eingeführten Stirnseite des Anschlussstutzens angeordnet.

Der Temperaturfühler kann einen sich in der Längserstreckungsrichtung erstreckenden Grundkörper aus beispielsweise Kunststoff mit sich in der Längserstreckungsrichtung erstreckenden Anschlussleitungen aufweisen. Die Anschlussleitungen können beispielweise in den Kunststoff des Grundkörpers eingespritzt sein. Der Endabschnitt des Grundkörpers mit der Temperaturmesszelle kann unterschiedliche Formen aufweisen. Hier bestehen vorteilhaft zahlreiche Freiheitsgrade, da der gesamte Freiraum zwischen dem ersten Abschnitt und dem dritten Abschnitt zur geometrischen Ausgestaltung des Endabschnittes genutzt werden kann. Der Grundkörper kann über ein einfaches Dichtungselement gegenüber einer Aufnahmeöffnung in dem ersten Abschnitt abgedichtet werden. Dadurch kann der Temperaturfühler in einfacher Weise beispielsweise in die an dem ersten Abschnitt des Anschlussstutzens vorgesehene Aufnahmeöffnung eingeschoben werden.

Weiterhin vorteilhaft ist eine Messvorrichtung mit einem Sensor mit den oben beschriebenen Merkmalen, und mit einem Kanalteil, welches einen Strömungskanal für eine strömendes fluides Medium aufweist, wobei eine Messöffnung in dem Kanalteil ausgebildet ist, wobei der Anschlussstutzen des Sensors in die Messöffnung derart eingesetzt ist, dass zumindest der mit der Trennmembran versehene dritte Abschnitt des Anschlussstutzens und ein mit einer Temperaturmesszelle versehender Endabschnitt des Temperaturfühlers dem strömenden Medium ausgesetzt sind. Der erste Abschnitt des Anschlussstutzens wird in die Messöffnung eingesetzt und braucht nicht aus der Messöffnung herauszuragen. Vorteilhaft kann ein Dichtungselement zur Abdichtung der Messöffnung daher an dem ersten Abschnitt angeordnet werden.

In einer vorteilhaften Ausführungsform kann die Messöffnung eine sich zu dem Strömungskanal hin öffnende Aussenkung aufweisen. Die Aussenkung kann beispielsweise konusförmig ausgebildet sein. Der mit der Temperaturmesszelle versehende Endabschnitt des Temperaturfühlers kann wenigstens teilweise innerhalb des durch die Aussenkung gebildeten Bereichs der Messöffnung angeordnet werden. Dadurch wird vorteilhaft erreicht, dass einerseits der dritte Abschnitt des Anschlussstutzens mit der Trennmembran nicht sehr tief in den Strömungskanal eingeführt werden muss, andererseits aber dennoch eine wirksame Umströmung des mit der Temperaturmesszelle versehenen Bereichs des Temperaturfühlers möglich ist. Die Formgebung des Anschlussstutzens kann vorzugsweise so weitergebildet werden, dass das strömende Medium verstärkt in den Bereich der Aussenkung einströmt.

### Kurze Beschreibung der Zeichnungen

Nachfolgend werden mögliche Ausführungsformen der Erfindung unter Bezugnahme auf die beiliegenden Figuren erläutert. In der Zeichnung zeigen:
- Figur 1: einen Querschnitt durch ein erstes Ausführungsbeispiel einer Messvorrichtung mit dem erfindungsgemäßen Sensor,
- Figur 2: einen Querschnitt durch ein zweites Ausführungsbeispiel einer Messvorrichtung mit dem erfindungsgemäßen Sensor,
- Figur 3: einen Querschnitt durch ein drittes Ausführungsbeispiel einer Messvorrichtung mit dem erfindungsgemäßen Sensor,
- Figur 4: ein Beispiel einer Ausführungsform des Temperaturfühlers.

### Ausführungsformen der Erfindung

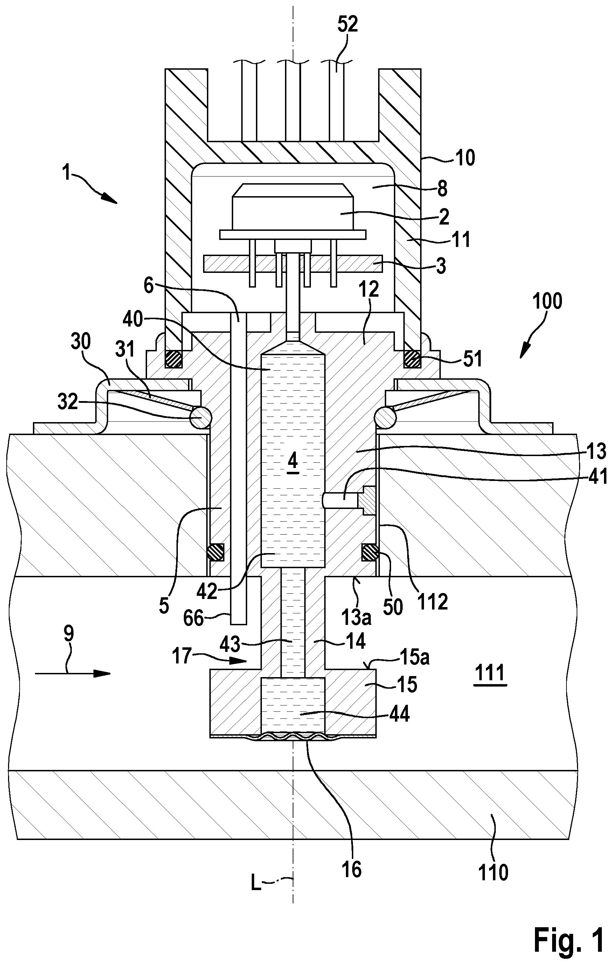

Figur 1 zeigt einen Querschnitt durch ein erstes Ausführungsbeispiel einer Messvorrichtung 100 mit dem erfindungsgemäßen Sensor 1. Der Sensor 1 umfasst ein Sensorgehäuse 10, welches im vorliegenden Fall beispielsweise zweiteilig ausgebildet ist und ein Gehäuseunterteil 12 aus beispielsweise Metall oder Kunststoff und ein Gehäuseoberteil 11 aus beispielsweise Kunststoff aufweist. Das Gehäuseoberteil 11 kann unter Zwischenlage eines Dichtungselementes 51 auf dem Gehäuseunterteil 12 angeordnet sein, wobei zwischen dem Gehäuseunterteil 12 und dem Gehäuseoberteil 11 ein geschlossener Gehäuseinnenraum 8 gebildet ist, in dem ein beispielsweise als Druckmesszelle ausgebildeter Drucksensor 2 angeordnet ist. Der Drucksensor 2 kann beispielsweise mit einer Leiterplatte 3 elektrisch kontaktiert sein, die wiederum mit Anschlussstiften 52 des oberen Gehäuseteils 11 über nicht dargestellte Kontaktfedern elektrisch verbunden werden kann. Der Drucksensor 2 kann aber auch in anderer Form mit den Anschlussstiften 52 kontaktiert sein. Das Gehäuseunterteil 12 weist einen Anschlussstutzen 5 auf, der einstückig mit dem Gehäuseunterteil 12 ausgebildet sein kann und der zur Einführung in eine Messöffnung 112 eines Kanalteils 110 geeignet ist, wie noch weiter unten erläutert wird. Der Anschlussstutzen 5 weist beispielsweise eine zylindrische Außenwand auf und kann in die vorzugsweise zylindrische Messöffnung 112 beispielsweise eingeschoben werden. Die Außenwand des Anschlussstutzens 5 kann an einem ersten Abschnitt 13 des Anschlussstutzens eine umlaufende Dichtung 50, beispielweise einen O-Ring aufweisen, welcher die Messöffnung 112 abdichtet.

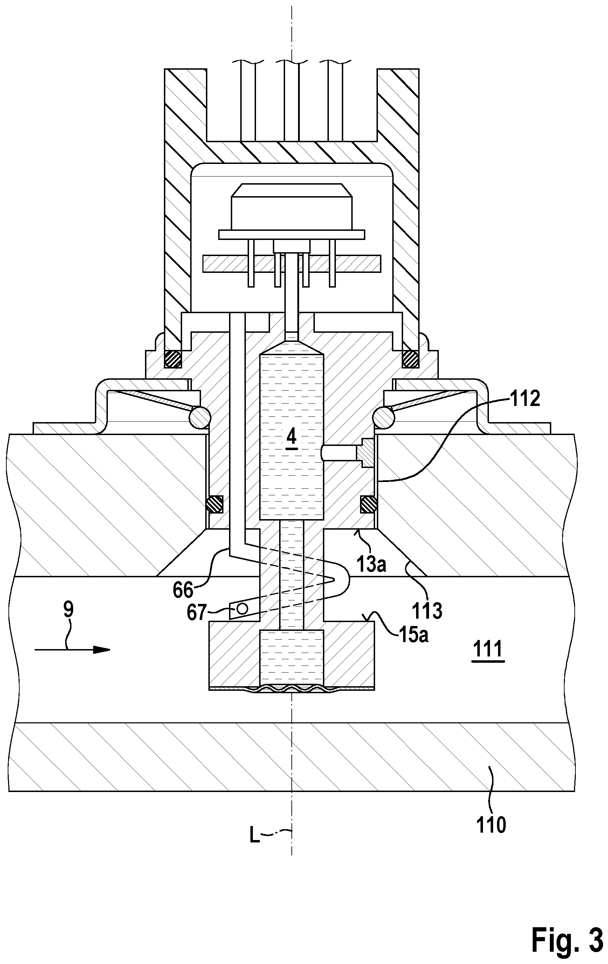

In einer nur in Figur 3 dargestellten Längserstreckungsrichtung L des Anschlussstutzens 5, welche parallel zur Einführrichtung des Anschlussstutzens 5 in die Messöffnung 112 verläuft, schließt sich an den ersten Abschnitt 13, ein zweiter Abschnitt 14 und ein dritter Abschnitt 15 an. Wie in Figur 1 zu erkennen ist, ist der Außendurchmesser des zweiten Abschnitts 14 deutlich kleiner als der Außendurchmesser des ersten Abschnitts 13 ausgebildet. Der Außendurchmesser des dritten Abschnitts 15 kann dem Außendurchmesser des ersten Abschnitts 13 entsprechen und ist daher deutlich größer als der Außendurchmesser des zweiten Abschnitts 14 ausgebildet, so dass an dem Anschlussstutzen 5 eine umlaufende Ringnut ausgebildet ist, welche durch eine kreisringförmige Fläche 13a des ersten Abschnitts 13 und eine kreisringförmige Fläche 15a des dritten Abschnitts 15 flankiert wird. Dadurch besteht zwischen dem ersten Abschnitt 13 und dem dritten Abschnitt 15 ein Freiraum 17.

Wie in Figur 1 weiterhin dargestellt ist, weist der Anschlussstutzen 5 einen mit einer Druckübertragungsflüssigkeit 4 gefüllten Kanal 40 auf, der auf der Stirnseite des dritten Abschnitts 15 mit einer flexiblen Trennmembran 16 aus beispielsweise Stahl verschlossen ist und der an einer von dem fluiden Medium abweisenden Seite mit dem Drucksensorelement 2 derart in Verbindung steht, dass ein auf die Trennmembran 16 wirkender Druck des Mediums 9 über die Druckübertragungsflüssigkeit 4 auf das Drucksensorelement 2 übertragbar ist.

Der Kanal 40 kann einen in dem ersten Abschnitt 13 des Anschlussstutzens 5 angeordneten ersten Kanalabschnitt 42, einen in dem zweiten Abschnitt 14 des Anschlussstutzens 5 angeordneten zweiten Kanalabschnitt 43 und einen in dem dritten Abschnitt 15 des Anschlussstutzens 5 angeordneten dritten Kanalabschnitt 44 aufweisen. Der Durchmesser des zweiten Kanalabschnitts 43 kann kleiner als der Durchmesser des ersten Kanalabschnitts 42 und des dritten Kanalabschnitts 44 ausgebildet sein. Dies ist nicht zwingend erforderlich, kann jedoch hilfreich sein, um den Außendurchmesser des zweiten Abschnitts 14 des Anschlussstutzens 5 zu verkleinern. Der Kanal 40 kann, wie in Figur 1 dargestellt, über einen beispielsweise in dem ersten Abschnitt 13 vorgesehenen und mit einem Stopfen oder in anderer Weise verschließbaren Seitenkanal 41 mit der Druckübertragungsflüssigkeit 4 befüllt werden.

Weiterhin weist der Sensor 1 einen Temperaturfühler 6 auf. Der Temperaturfühler 6 ist ausgehend von dem Gehäuseinnenraum 8 in der Längserstreckungsrichtung durch den ersten Abschnitt 13 hindurchgeführt ist und ragt in den Freiraum 17 hinein, wobei der Temperaturfühler 6 ausgehend von der dem Freiraum 17 zugewandten Fläche 13a des ersten Abschnitts 13 des Anschlussstutzens 5 mit einem Endabschnitt 63, der eine in Figur 1 nicht dargestellte Temperaturmesszelle 63 aufweist, in den Freiraum 5 abragt. Ein von dem Endabschnitt 66 abweisender Anschlussbereich des Temperaturfühlers kann in dem Gehäuseinnenraum 8 des Sensorgehäuses 10 angeordnet sein und dort beispielsweise mit der Leiterplatte 3 elektrisch kontaktiert sein.

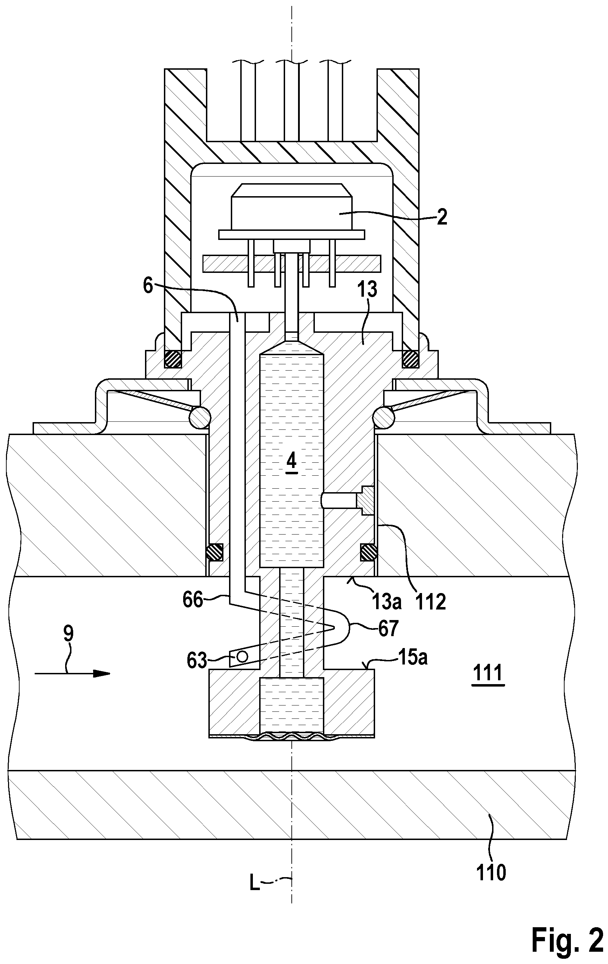

Eine Weiterbildung des erfindungsgemäßen in Sensors 1 ist in Figur 2 dargestellt. Von der Ausführungsform in Figur 1 unterscheidet sich der Sensor 1 in Figur 2 nur dadurch, dass der Endabschnitt 66 mit der Temperaturmesszelle 63 innerhalb des Freiraums 17 zumindest teilweise um den zweiten Abschnitt 14 herumgewunden ist (Windung 67), und zwar vorzugsweise derart, dass der Außenmantel des zweiten Abschnitts 14 nicht berührt wird. Die gesamte Kontur des Endabschnitts 66 ist innerhalb der Grenzen einer Projektion des dritten Abschnitts 15 auf den ersten Abschnitt 13 in der Längserstreckungsrichtung enthalten, so dass kein Teil des Endabschnitts 66 über den Freiraum 17 hinausragt. Dies ist hilfreich, damit der Anschlussstutzen 4 problemlos in die Messöffnung 112 eingeschoben werden kann. Durch die in Figur 2 dargestellte Ausgestaltung des Endabschnitt 66 mit der Windung 67 wird vorteilhaft erreicht, dass die Temperaturmesszelle 63 über einen in dem Freiraum angeordneten sehr langen freiliegenden Abschnitt des Temperaturfühlers 6 in der Strömung gehalten wird. Die eigentliche Temperaturmesszelle 63 des Temperaturfühlers 6 ist daher von dem ersten Abschnitt 13 des Anschlussstutzens 5 thermisch noch besser entkoppelt als in dem Ausführungsbeispiel der Figur 1.

In Figur 1 und Figur 2 ist weiterhin eine Messvorrichtung 100 dargestellt, welche außer dem bereits beschriebenen Sensor 1 ein Kanalteil 110 aufweist. Das Kanalteil 110 kann beispielsweise eine einen Strömungskanal 111 umgebende zylindrische Wand aufweisen, in der eine beispielsweise zylindrische Messöffnung 112 angeordnet ist, die in den Strömungskanal einmündet. Ein fluides Medium 9 (Gas oder Flüssigkeit) dessen Druck und Temperatur erfasst werden soll, strömt im Betrieb in dem Strömungskanal 111. Der Anschlussstutzen 5 des Sensors 1 ist in Figur 1 und Figur 2 in die Messöffnung 112 derart eingesetzt ist, dass zumindest der mit der Trennmembran 16 versehene dritte Abschnitt 15 des Anschlussstutzens 5 und der mit der Temperaturmesszelle 63 versehender Endabschnitt 66 des Temperaturfühlers 6 dem strömenden Medium 9 ausgesetzt sind. Die Messöffnung 112 wird über einen als Dichtungsring 50 ausgebildeten O-Ring an dem ersten Abschnitt 13 abgedichtet. Zur Festlegung des Sensors 1 kann ein als Tiefziehteil ausgeformtes, ringartiges Halteblech 30 verwandt werden, welches auf dem Außenmantel des Kanalteils 110 befestigt wird. Mittels einer Tellerfeder 31, die sich endseitig einerseits an dem Halteblech 30 und andererseits an einem auf das Gehäuseunterteil 12 aufgezogenen Sprengring 32 abstützt, wird erreicht, dass der Anschlussstutzen 5 in der Längserstreckungsrichtung L in der Messöffnung 112 entgegen der Federkraft der Tellerfeder 31 beweglich ist. Diese Maßnahme dient dem Gefrierschutz.

Eine vorteilhafte Abwandlung der Messvorrichtung 100 und des Sensors 1 ist in Figur 3 dargestellt. In diesem Ausführungsbeispiel weist die Messöffnung 112 eine sich zu dem Strömungskanal 111 hin öffnende Aussenkung 113 auf. Die Aussenkung 113 kann wie dargestellt beispielsweise konusförmig ausgebildet sein. Der mit der Temperaturmesszelle 63 versehende Endabschnitt 66 mit der Windung 67 des Temperaturfühlers 6 ist wenigstens teilweise innerhalb des durch die Aussenkung 113 gebildeten Bereichs der Messöffnung 112 angeordnet. Dennoch ist die Temperaturmesszelle 63 wie in Figur 2 direkt der Strömung des Mediums 9 ausgesetzt. Man erkennt, dass dadurch im Vergleich zur Figur 1 und Figur 2 erreicht wird, dass der erste Abschnitt 13 des Anschlussstutzens 5 kürzer ausgebildet werden kann und der dritte Abschnitt 15 des Anschlussstutzens 5 mit der Trennmembran 16 nicht so weit in den Strömungskanal 111 eingeführt werden muss wie in Figur 1 und Figur 2. Dadurch wird der für die Anordnung des Sensors 1 benötigte Raumbedarf in Richtung der Längserstreckung L verringert.

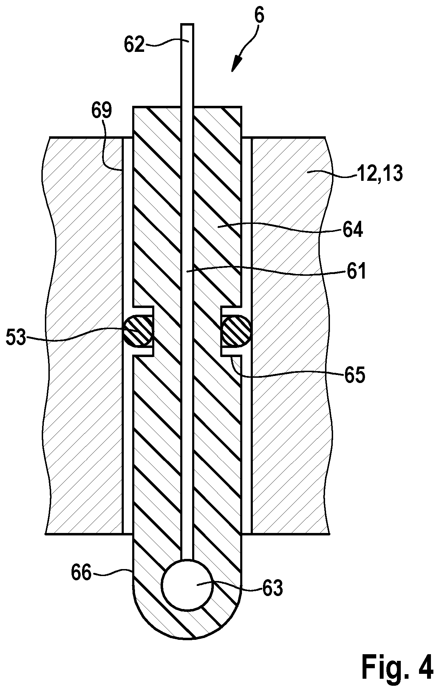

Ein Ausführungsbeispiel des Temperaturfühlers 6 ist in der Figur 4 dargestellt. Der Temperaturfühler 6 kann beispielsweise einen sich in der Längserstreckungsrichtung L erstreckenden Grundkörper 64 aus beispielsweise Kunststoff mit sich in der Längserstreckungsrichtung L erstreckenden Anschlussleitungen 61 aufweist. Die Anschlussleitungen 61 können in den Grundkörper 64 eingespritzt werden und an einem ersten Endabschnitt des Grundkörpers 64 aus diesem hervorstehende Anschlussabschnitte 62 aufweisen. Mit ihren von den Anschlussabschnitten 62 abweisenden Enden sind die Anschlussleitungen 61 an eine Temperaturmesszelle 63 angeschlossen, die in einem zweiten Endabschnitt 66 des Grundkörpers 64 eingeschlossen ist. Der Grundkörper 64 kann über ein in eine Nut 65 eingelegtes Dichtungselement 53, beispielsweise einen O-Ring, gegenüber einer Aufnahmeöffnung 69 in dem ersten Abschnitt 13 des Anschlussstutzens 5 abgedichtet werden. Ein solcher Temperaturfühler 6 könnte beispielsweise bei dem in Figur 1 dargestellten Sensor 1 eingesetzt werden.

## Patentansprüche

1. Sensor (1) zur Erfassung eines Drucks und einer Temperatur eines fluiden Mediums (9), umfassend ein Sensorgehäuse (10) mit einem Anschlussstutzen (5) zur Einführung in eine Messöffnung (112), ein in dem Sensorgehäuse (10) angeordnetes Drucksensorelement (2), ein in dem Anschlussstutzen (5) verlaufender mit einer Druckübertragungsflüssigkeit (4) gefüllter Kanal (40), der auf einer dem fluiden Medium (9) zuweisenden Seite mit einer Trennmembran (16) verschlossen ist und der auf einer dem fluiden Medium (9) abweisenden Seite mit dem Drucksensorelement (2) derart in Verbindung steht, dass ein auf die Trennmembran (16) wirkender Druck des Mediums (9) über die Druckübertragungsflüssigkeit (4) auf das Drucksensorelement (2) übertragbar ist, und mit einem an dem Sensorgehäuse (10) angeordneten Temperaturfühler (6) zur Einführung in die Messöffnung (112), wobei der Anschlussstutzen (5) in einer Längserstreckungsrichtung (L) einen sich an das Sensorgehäuse (10) anschließenden ersten Abschnitt (13), einen sich an den ersten Abschnitt (13) anschließenden zweiten Abschnitt (14) und einen sich an den zweiten Abschnitt (15) anschließenden dritten Abschnitt (15) aufweist, dadurch gekennzecihnet, dass der Außendurchmesser des zweiten Abschnitts (14) kleiner als der Außendurchmesser des ersten Abschnitts (13) und der Außendurchmesser des dritten Abschnitts (15) ausgebildet ist, sodass zwischen dem ersten Abschnitt (13) und dem dritten Abschnitt (15) ein Freiraum (17) gebildet ist, wobei der Temperaturfühler (6) durch den ersten Abschnitt (13) hindurchgeführt ist und in den Freiraum (17) hineinragt.

2. Sensor (1) nach Anspruch 1, **dadurch gekennzeichnet, dass** der Freiraum (17) durch eine den zweiten Abschnitt (14) umlaufende Ringnut gebildet wird, welche durch eine dem Freiraum (17) zugewandte Fläche (13a) des ersten Abschnitts (13) und eine dem Freiraum (17) zugwandte Fläche (15a) des dritten Abschnitts (15) flankiert wird.

3. Sensor (1) nach einem der Ansprüche 1 oder 2, **dadurch gekennzeichnet, dass** der Temperaturfühler (6) mit einem eine Temperaturmesszelle (63) aufweisenden Endabschnitt (66) aus einer dem Freiraum (17) zugewandten Fläche (13a) des ersten Abschnitts (13) des Anschlussstutzens (5) in den Freiraum (5) abragt.

4. Sensor (1) nach Anspruch 3, **dadurch gekennzeichnet, dass** der Endabschnitt (66) in dem Freiraum (17) zumindest teilweise um den zweiten Abschnitt (14) herumgewunden ist.

5. Sensor (1) nach Anspruch 3, **dadurch gekennzeichnet, dass** der Temperaturfühler (6) einen von dem Endabschnitt (66) abweisenden Anschlussbereich (62) aufweist, der in einem Gehäuseinnenraum (8) des Sensorgehäuses (10) angeordnet ist.

6. Sensor (1) nach einem der vorstehenden Ansprüche, **dadurch gekennzeichnet, dass** die Trennmembran (16) an einem von dem Sensorgehäuse (10) abgewandten Ende des dritten Abschnitts (15) des Anschlussstutzens (5) angeordnet ist.

7. Sensor (1) nach einem der vorstehenden Ansprüche, **dadurch gekennzeichnet, dass** der Temperaturfühler (6) einen sich in der Längserstreckungsrichtung (L) erstreckenden Grundkörper (64) mit sich in der Längserstreckungsrichtung (L) erstreckenden Anschlussleitungen (61) aufweist, wobei der Grundkörper (64) über ein Dichtungselement (53) gegenüber einer Aufnahmeöffnung (69) in dem ersten Abschnitt (13) abgedichtet ist.

8. Messvorrichtung (100) mit einem Sensor (1) nach einem der Ansprüche 1 bis 7 und mit einem Kanalteil (110), welches einen Strömungskanal (111) für ein strömendes fluides Medium (9) aufweist, wobei eine Messöffnung (112) in dem Kanalteil (10) ausgebildet ist, wobei der Anschlussstutzen (5) des Sensors (1) in die Messöffnung derart eingesetzt ist, dass zumindest der mit der Trennmembran (16) versehene dritte Abschnitt (15) des Anschlussstutzens (5) und ein mit einer Temperaturmesszelle (63) versehender Endabschnitt (66) des Temperaturfühlers (6) dem strömenden Medium (9) ausgesetzt sind.

9. Messvorrichtung (100) nach Anspruch 8, **dadurch gekennzeichnet, dass** die Messöffnung (112) einen sich zu dem Strömungskanal (111) hin öffnende Aussenkung (113) aufweist, und dass der mit der Temperaturmesszelle (63) versehende Endabschnitt (66) des Temperaturfühlers (6) wenigstens teilweise innerhalb des durch die Aussenkung (113) gebildeten Bereichs der Messöffnung (112) angeordnet ist.

## Claims

1. Sensor (1) for detecting a pressure and a temperature of a fluid medium (9), comprising a sensor housing (10) with a connection piece (5) for insertion into a measuring opening (112), a pressure sensor element (2) arranged in the sensor housing (10), a channel (40) which runs in the connection piece (5), is filled with a pressure transfer liquid (4), is closed by a separating membrane (16) on a side close to the fluid medium (9) and is connected to the pressure sensor element (2) on a side remote from the fluid medium (9) in such a way that a pressure of the medium (9) acting on the separating membrane (16) can be transferred to the pressure sensor element (2) via the pressure transfer liquid (4), and with a temperature probe (6) arranged on the sensor housing (10) for insertion into the measuring opening (112), wherein the connection piece (5) has, in a direction of longitudinal extent (L), a first section (13) which adjoins the sensor housing (10), a second section (14) which adjoins the first section (13) and a third section (15) which adjoins the second section (15), **characterized in that** the outside diameter of the second section (14) is designed to be smaller than the outside diameter of the first section (13) and the outside diameter of the third section (15), so that a clearance (17) is formed between the first section (13) and the third section (15), wherein the temperature probe (6) is passed through the first section (13) and projects into the clearance (17).

2. Sensor (1) according to Claim 1, **characterized in that** the clearance (17) is formed by an annular groove which encircles the second section (14) and is flanked by a surface (13a) of the first section (13) facing the clearance (17) and a surface (15a) of the third section (15) facing the clearance (17).

3. Sensor (1) according to either of Claims 1 and 2, **characterized in that** the temperature probe (6) protrudes into the clearance (5) from a surface (13a) of the first section (13) of the connection piece (5) facing the clearance (17) by way of an end section (66) having a temperature measuring cell (63).

4. Sensor (1) according to Claim 3, **characterized in that** the end section (66) is at least partially wound around the second section (14) in the clearance (17).

5. Sensor (1) according to Claim 3, **characterized in that** the temperature probe (6) has a connection region (62) remote from the end section (66) and arranged in a housing interior (8) of the sensor housing (10).

6. Sensor (1) according to any of the preceding claims, **characterized in that** the separating membrane (16) is arranged at an end of the third section (15) of the connection piece (5) remote from the sensor housing (10).

7. Sensor (1) according to any of the preceding claims, **characterized in that** the temperature probe (6) has a main body (64) extending in the direction of longitudinal extent (L) and having connection lines (61) extending in the direction of longitudinal extent (L), wherein the main body (64) is sealed off from a receiving opening (69) in the first section (13) by means of a sealing element (53).

8. Measuring device (100) having a sensor (1) according to any of Claims 1 to 7 and having a channel part (110) which has a flow channel (111) for a flowing fluid medium (9), wherein a measuring opening (112) is formed in the channel part (10), wherein the connection piece (5) of the sensor (1) is inserted into the measuring opening in such a way that at least the third section (15) of the connection piece (5) provided with the separating membrane (16) and an end section (66) of the temperature probe (6) provided with a temperature measuring cell (63) are exposed to the flowing medium (9).

9. Measuring device (100) according to Claim 8, **characterized in that** the measuring opening (112) has a recess (113) which is open to the flow channel (111), and **in that** the end section (66) of the temperature probe (6) which is provided with the temperature measuring cell (63) is arranged at least partially within the region of the measuring opening (112) formed by the recess (113).

## Revendications

1. Capteur (1) destiné à détecter une pression et une température d'un milieu fluide (9), comprenant un boîtier de capteur (10) pourvu d'un manchon de raccordement (5) destiné à être introduit dans une ouverture de mesure (112), un élément de capteur de pression (2) disposé dans le boîtier de capteur (10), un canal (40) s'étendant dans le manchon de raccordement (5) et rempli d'un liquide de transmission de pression (4), qui est fermé par une membrane de séparation (16) sur un côté faisant face au milieu fluide (9) et qui est relié à l'élément capteur de pression (2) sur un côté orienté à l'opposé du milieu fluide (9) de telle sorte qu'une pression du fluide (9) agissant sur la membrane de séparation (16) peut être transmise sur l'élément capteur de pression (2) par l'intermédiaire du liquide de transmission de pression (4), et comprenant une sonde de température (6) disposée sur le boîtier de capteur (10) destinée à être introduite dans l'ouverture de mesure (112), le manchon de raccordement (5) possédant, dans une direction d'extension longitudinale (L), une première portion (13) qui se raccorde au boîtier de capteur (10), une deuxième portion (14) qui se raccorde à la première portion (13) et une troisième portion (15) qui se raccorde à la deuxième portion (15), **caractérisé en ce que** le diamètre extérieur de la deuxième portion (14) est réalisé plus petit que le diamètre extérieur de la première portion (13) et que le diamètre extérieur de la troisième portion (15), de sorte qu'un espace libre (17) est formé entre la première portion (13) et la troisième portion (15), la sonde de température (6) passant à travers la première portion (13) et faisant saillie dans l'espace libre (17).

2. Capteur (1) selon la revendication 1, **caractérisé en ce que** l'espace libre (17) est formé par une rainure annulaire entourant la deuxième portion (14), laquelle est bordée par une surface (13a) de la première portion (13) qui fait face à l'espace libre (17) et une surface (15a) de la troisième portion (15) qui fait face à l'espace libre (17).

3. Capteur (1) selon l'une des revendications 1 ou 2, **caractérisé en ce que** la sonde de température (6) fait saillie dans l'espace libre (5) avec une portion d'extrémité (66) possédant une cellule de mesure de température (63) à partir d'une surface (13a) de la première portion (13) du manchon de raccordement (5) qui fait face à l'espace libre (17).

4. Capteur (1) selon la revendication 3, **caractérisé en ce que** la portion d'extrémité (66) est enroulée au moins partiellement autour de la deuxième portion (14) dans l'espace libre (17).

5. Capteur (1) selon la revendication 3, **caractérisé en ce que** la sonde de température (6) possède une zone de raccordement (62) orientée à l'opposé de la portion d'extrémité (66), qui est disposée dans un espace intérieur de boîtier (8) du boîtier de capteur (10).

6. Capteur (1) selon l'une des revendications précédentes, **caractérisé en ce que** la membrane de séparation (16) est disposée à une extrémité de la troisième portion (15) du manchon de raccordement (5) orientée à l'opposé au boîtier de capteur (10).

7. Capteur (1) selon l'une des revendications précédentes, **caractérisé en ce que** la sonde de température (6) possède un corps de base (64) qui s'étend dans la direction d'extension longitudinale (L) avec des lignes de raccordement (61) qui s'étendent dans la direction d'extension longitudinale (L), le corps de base (64) étant rendu étanche par rapport à une ouverture de réception (69) dans la première portion (13) par le biais d'un élément d'étanchéité (53).

8. Dispositif de mesure (100) comprenant un capteur (1) selon l'une des revendications 1 à 7 et comprenant une partie de canal (110), laquelle possède un canal d'écoulement (111) pour un milieu fluide (9) en écoulement, une ouverture de mesure (112) étant formée dans la partie de canal (10), le manchon de raccordement (5) du capteur (1) étant inséré dans l'ouverture de mesure de telle sorte qu'au moins la troisième portion (15) du manchon de raccordement (5), pourvue de la membrane de séparation (16), ainsi qu'une portion d'extrémité (66) de la sonde de température (6), pourvue d'une cellule de mesure de température (63), soient exposées au milieu (9) en écoulement.

9. Dispositif de mesure (100) selon la revendication 8, **caractérisé en ce que** l'ouverture de mesure (112) présente un évidement externe (113) qui s'ouvre en direction du canal d'écoulement (111) et **en ce que** la portion d'extrémité (66) de la sonde de température (6) pourvue de la cellule de mesure de température (63) est disposée au moins partiellement à l'intérieur de la zone de l'ouverture de mesure (112) formée par l'évidement externe (113).
